# EUROPÄISCHE PATENTANMELDUNG

(11) **EP 0 961 071 A2**
(43) Veröffentlichungstag der Anmeldung: **01.12.1999**
(21) Anmeldenummer: 99108327.0
(22) Anmeldetag: 28.04.1999
(51) Int. Cl.: F16L 37/14

(54) **Steckkupplung**

(30) Priorität: 26.05.1998 DE 19839726; 24.06.1998 DE 19827763
(71) Anmelder: Firma Muhr und Bender, D-57439 Attendorn (DE)
(72) Erfinder: Möller, Rudolf, 57439 Attendorn (DE); Hufnagel, Mario, 57439 Attendorn (DE)
(74) Vertreter: Patentanwälte Gesthuysen, von Rohr, Weidener, Häckel

(57) **Zusammenfassung**

Beschrieben und dargestellt ist eine Steckkupplung (1), insbesondere für Schlauchverbindungen und zur Verwendung in Kraftfahrzeugen, mit einer Kupplungsaufnahme (3) und mit einem Kupplungsstecker (4), wobei die Kupplungsaufnahme (3) mit einer Einstecköffnung (7) für den Kupplungsstecker (4) versehen ist und mindestens eine der Verriegelung von Kupplungsaufnahme (3) und Kupplungsstecker (4) dienende Verriegelungsfeder (8) aufweist und wobei an der Verriegelungsfeder (8) mindestens ein Verriegelungsabschnitt (9, 10) und ein von der Außenseite der Kupplungsaufnahme (3) her betätigbarer Entriegelungsabschnitt (13) vorgesehen sind.

Die erfindungsgemäße Steckkupplung ist in bezug auf die Möglichkeit des Verriegelns und des Entriegelns gegenüber dem Stand der Technik wesentlich verbessert, insbesondere so ausgestaltet und weitergebildet, daß die Verriegelungsfeder (8) nicht verloren gehen kann, und zwar dadurch, daß die Kupplungsaufnahme (3) eine zur Einstecköffnung (7) hin zumindest teilweise offene Nut (14) aufweist und die Verriegelungsfeder (8) unverlierbar in der Nut (14) vorgesehen ist.

## Beschreibung

Die Erfindung betrifft eine Steckkupplung, insbesondere für Schlauchverbindungen und zur Verwendung in Kraftfahrzeugen, mit einer Kupplungsaufnahme und mit einem Kupplungsstecker, wobei die Kupplungsaufnahme mit einer Einstecköffnung für den Kupplungsstecker Versehen ist und mindestens eine der Verriegelung von Kupplungsaufnahme und Kupplungsstecker dienende Verriegelungsfeder aufweist und wobei an der Verriegelungsfeder mindestens ein Verriegelungsabschnitt und ein von der Außenseite der Kupplungsaufnahme her betätigbarer Entriegelungsabschnitt vorgesehen sind.

Die in Rede stehende Steckkupplung ist, wie eingangs ausgeführt, insbesondere für Schlauchverbindungen bestimmt, also für das Verbinden der Schlauchenden von zwei Schläuchen. Darauf ist jedoch die Verwendbarkeit der in Rede stehenden Steckkupplung nicht beschränkt. Einerseits kann diese Steckkupplung auch für Rohrverbindungen eingesetzt werden, jedenfalls dann, wenn es um die Verbindung von relativ flexiblen Rohren geht. Andererseits kann auch die Kupplungsaufnahme oder der Kupplungsstecker gleichsam ortsfest sein, so daß ein Schlauchende oder ein Rohrende, mit einer Kupplungsaufnahme oder mit einem Kupplungsstecker versehen, auf einen ortsfesten Kupplungsstecker aufgesteckt bzw. in eine ortsfeste Kupplungsaufnahme eingesteckt werden kann. Unabhängig von der vielseitigen Verwendbarkeit der in Rede stehenden Steckkupplung wird nachfolgend, natürlich ohne jede Beschränkung, immer eine Steckkupplung für Schlauchverbindungen beschrieben.

Eine Steckkupplung der eingangs beschriebenen Art ist bereits aus der Praxis bekannt. Zur Ver- und Entriegelung weist die bekannte Steckkupplung einen etwa U-förmig gebogenen Federdraht auf, der von außen her auf die Kupplungsaufnahme aufgesetzt bzw. in die Kupplungsaufnahme eingesetzt wird. Im Bereich der Einstecköffnung ist die Kupplungsaufnahme auf gegenüberliegenden Seiten mit durchgehenden Schlitzen versehen. In diese Schlitze eingeführt, ragen die Schenkel des U-förmigen Federdrahtes teilweise, nämlich mit jeweils einem Verriegelungsabschnitt, in die Einstecköffnung der Kupplungsaufnahme. Der Kupplungsstecker ist an seinem vorderen Ende mit einer Auflaufschräge versehen, die beim Einführen des Kupplungssteckers in die Einstecköffnung der Kupplungsaufnahme die beiden Schenkel des U-förmigen Federdrahtes nach außen drückt. Beim weiteren Einführen des Kupplungssteckers in die Einstecköffnung der Kupplungsaufnahme rasten die Verriegelungsabschnitte der beiden Schenkel des U-förmigen Federdrahtes hinter einen entsprechenden Anschlag am Kupplungsstecker. Der U-förmig gebogene Federdraht, der in der zuvor beschriebenen Weise als Verriegelungsfeder wirkt, ist an seinem U-Steg schlaufenartig nach außen gebogen, so daß dadurch zwischen der Kupplungsaufnahme und dem schlaufenartig ausgeführten U-Steg eine Betätigungsöffnung gebildet ist. Den Schenkelenden der beiden Schenkel des U-förmig gebogenen Federdrahtes sind an der Außenseite der Kupplungsaufnahme Führungsflächen zugeordnet, die durch jeweils einen Anschlag begrenzt sind. Zur Entriegelung wird in die zuvor beschriebene Betätigungsöffnung ein Entriegelungswerkzeug, z. B. ein Schraubendreher, eingeführt und der U-förmig gebogene Federdraht radial nach außen gedrückt oder gezogen. Dabei bewegen sich die Verriegelungsabschnitte der Schenkel des U-förmig gebogenen Federdrahtes nach außen, so daß diese Verriegelungsabschnitte außer Eingriff mit dem am Kupplungsstecker vorgesehenen Anschlag kommen. Durch die die Führungsflächen an der Kupplungsaufnahme begrenzenden Anschläge soll verhindert werden, daß die Verriegelungsfeder, also der U-förmig gebogene Federdraht, beim Entriegeln vollständig von der Kupplungsaufnahme abgezogen werden kann.

Nachteilig ist bei der bekannten, zuvor beschriebenen Steckkupplung, daß es beim Entriegeln trotz der die an der Kupplungsaufnahme vorgesehenen Führungsflächen begrenzenden Anschläge dazu kommen kann, daß die Verriegelungsfeder unbeabsichtigt von der Kupplungsaufnahme abgezogen wird und verloren geht, so daß für eine erneute Verriegelung von Kupplungsaufnahme und Kupplungsstecker erst eine neue Verriegelungsfeder beschafft werden muß. Außerdem kann die Verriegelungsfeder verbogen werden; sie muß dann zum Verriegeln von Hand wieder in ihre Ursprungslage gebracht werden. Nachteilig ist ferner, daß die Möglichkeit besteht, die in Rede stehende Steckkupplung ohne weiteres mit der Hand zu entriegeln; ein eigentlich ungewolltes Entriegeln kann dann z. B. zu einem Verbrühen führen, wenn über die in Rede stehende Steckkupplung ein heißes Medium geführt ist.

Der Erfindung liegt nun die Aufgabe zugrunde, die bekannte, zuvor beschriebene Steckkupplung in bezug auf die Möglichkeit des Verriegelns und des Entriegelns zu verbessern, insbesondere so auszugestalten und weiterzubilden, daß die Verriegelungsfeder nicht verloren gehen kann.

Die zuvor hergeleitete und aufgezeigte Aufgabe ist bei der erfindungsgemäßen Steckkupplung zunächst und im wesentlichen dadurch gelöst, daß die Kupplungsaufnahme eine zur Einstecköffnung hin zumindest teilweise offene Nut aufweist und die Verriegelungsfeder unverlierbar in der Nut vorgesehen ist.

Gegenüber dem eingangs beschriebenen, aus der Praxis bekannten Stand der Technik geht die Erfindung einen völlig neuen Weg. Statt der im Stand der Technik verwirklichten Anordnung der Verriegelungsfeder auf der Außenseite der Kupplungsaufnahme ist erfindungsgemäß die Verriegelungsfeder auf der Innenseite der Kupplungsaufnahme vorgesehen. Durch die innenseitige Anordnung der Verriegelungsfeder ist sichergestellt, daß diese auch beim Entriegeln nicht verloren gehen kann. Außerdem ist durch die unverlierbare Anordnung der Verriegelungsfeder in der innenliegenden Nut der Kupplungsaufnahme gewährleistet, daß die Verriegelungsfeder auch dann nicht verloren gehen kann, wenn sich in der Einstecköffnung der Kupplungsaufnahme kein Kupplungsstecker befindet.

Im einzelnen gibt es nun eine Vielzahl von Möglichkeiten, die erfindungsgemäße Steckkupplung auszugestalten und weiterzubilden. Dazu wird verwiesen einerseits auf die dem Patentanspruch 1 nachgeordneten Patentansprüche, andererseits auf die nachfolgende Beschreibung eines bevorzugten Ausführungsbeispiels in Verbindung mit der Zeichnung. In der Zeichnung zeigt
- Fig. 1: eine Seitenansicht, teilweise geschnitten, eines Ausführungsbeispiels einer erfindungsgemäßen Steckkupplung, wobei der Kupplungsstecker in die Kupplungsaufnahme eingesteckt ist,
- Fig. 2: einen Schnitt durch die in Fig. 1 dargestellte Steckkupplung längs der Linie II - II, und zwar links im verriegelten Zustand, rechts im entriegelten Zustand,
- Fig. 3: einen Schnitt durch die in Fig. 1 dargestellte Steckkupplung längs der Linie III-III,
- Fig. 4: einen Längsschnitt durch einen Teil einer Kupplungsaufnahme einer erfindungsgemäßen Steckkupplung,
- Fig. 5: den Gegenstand nach Fig. 4 in Richtung der Pfeile V gesehen,
- Fig. 6: einen Längsschnitt durch einen weiteren Teil einer Kupplungsaufnahme einer erfindungsgemäßen Steckkupplung, wobei der dargestellte Teil einer Kupplungsaufnahme den in Fig. 4 dargestellten Teil ergänzt,
- Fig. 7: den Gegenstand nach Fig. 6 in Richtung des Pfeils VII gesehen,
- Fig. 8: eine Draufsicht auf eine bevorzugte Ausführungsform einer zu der erfindungsgemäßen Steckkupplung gehörenden Verriegelungsfeder, im gestreckten Zustand,
- Fig. 9: eine Seitenansicht der in Fig. 8 dargestellten Verriegelungsfeder, mit bereits funktionsgerecht abgebogenen Verriegelungsabschnitten, im unbelasteten Zustand,
- Fig. 10: eine perspektivische Darstellung der Verriegelungsfeder nach Fig. 9, im Einbauzustand,

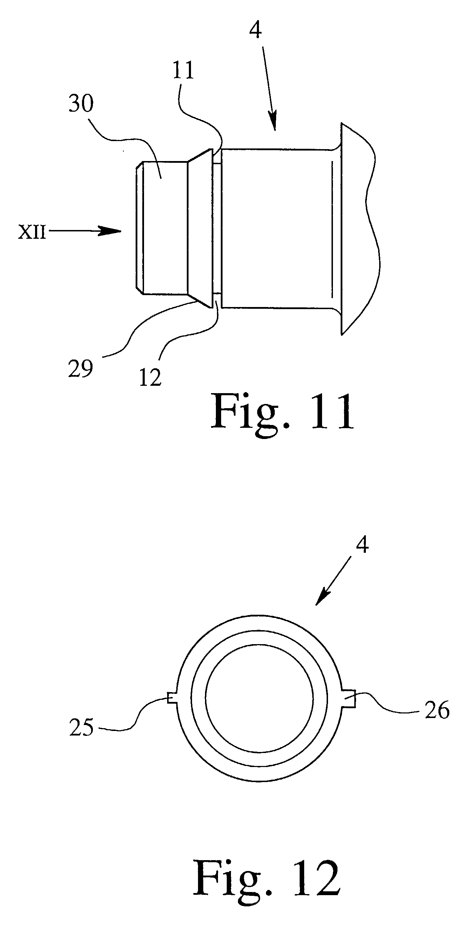

- Fig. 11: eine Seitenansicht eines Teils eines zu der erfindungsgemäßen Steckkupplung gehörenden Kupplungssteckers und
- Fig. 12: den Gegenstand nach Fig. 11 in Richtung des Pfeils XII gesehen.

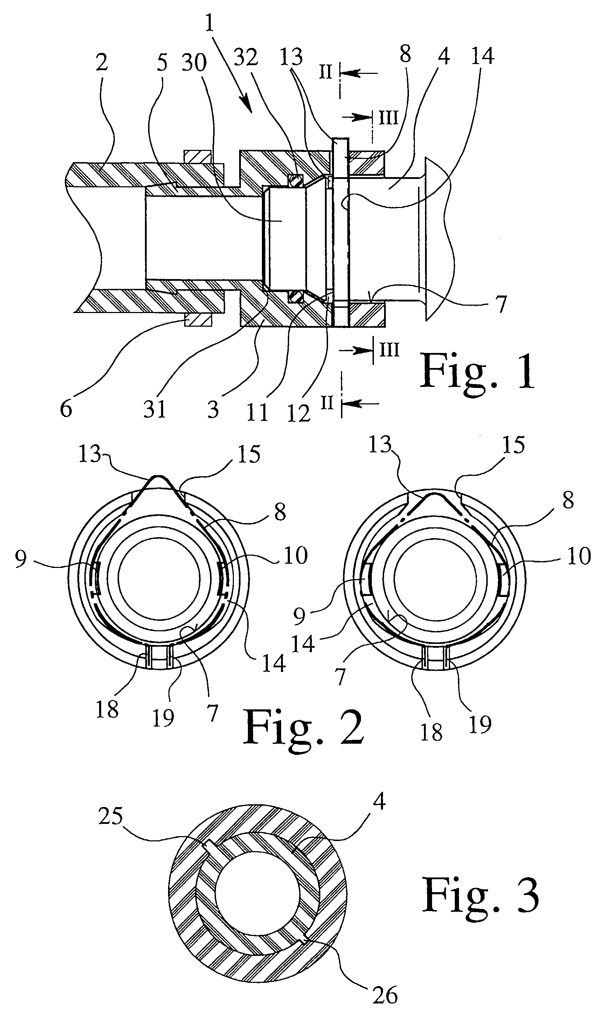

In Fig. 1 ist eine Steckkupplung 1 dargestellt, die vorliegend zur Verbindung eines Schlauches, von dem nur ein Schlauchende 2 dargestellt ist, mit einem anderen, nicht dargestellten Schlauch dient. Eine derartige Steckkupplung 1 wird insbesondere im Kfz-Bereich eingesetzt, beispielsweise bei Kühlwassersystemen und bei Heizungssystemen. Die Steckkupplung 1 besteht in ihrem grundsätzlichen Aufbau aus einer Kupplungsaufnahme 3 und aus einem Kupplungsstecker 4. Im dargestellten Ausführungsbeispiel ist die Kupplungsaufnahme 3 mit einem Anschlußstutzen 5 versehen und über den Anschlußstutzen 5 mit dem Schlauchende 2 des im übrigen nicht dargestellten Schlauches verbunden. Zur Befestigung des Schlauchendes 2 mit dem Anschlußstutzen 5 der Kupplungsaufnahme 3 ist im in Fig. 1 dargestellten Ausführungsbeispiel eine Federbandschelle 6 vorgesehen. Nicht dargestellt ist, daß auch der Kupplungsstecker 4 einen dem Anschlußstutzen 5 der Kupplungsaufnahme 3 entsprechenden Anschlußstutzen aufweisen kann.

Die Fig. 1 zeigt, daß die Kupplungsaufnahme 3 mit einer Einstecköffnung 7 für den Kupplungsstecker 4 versehen ist, außerdem eine der Verriegelung von Kupplungsaufnahme 3 und Kupplungsstecker 4 dienende Verriegelungsfeder 8 aufweist. An der Verriegelungsfeder 8 sind, wie das die Fig. 2, 5 und 8 bis 10 zeigen, zwei Verriegelungsabschnitte 9, 10 vorgesehen, die bei in die Kupplungsaufnahme 3 eingestecktem Kupplungsstecker 4 einen am Kupplungsstecker 4 vorgesehenen Anschlag 11 hintergreifen. Der Anschlag 11 ergibt sich im dargestellten Ausführungsbeispiel durch eine umlaufende Nut 12 am Kupplungsstecker 4. Des weiteren weist die Verriegelungsfeder 8, wie dies die Fig. 2, 5, 9 und 10 zeigen, einen Entriegelungsabschnitt 13 auf, der von der Außenseite der Kupplungsaufnahme 3 betätigbar ist. Wird der Entriegelungsabschnitt 13 der Verriegelungsfeder 8 heruntergedrückt, so hinterfassen die Verriegelungsabschnitte 9 und 10 der Verriegelungsfeder 8 nicht mehr den am Kupplungsstecker 4 verwirklichten Anschlag 11, wie das im rechten Teil der Fig. 2 dargestellt ist.

Wesentlich ist nun, daß bei der erfindungsgemäßen Steckkupplung 1 die Kupplungsaufnahme 3, wie dies die Fig. 2, 5 und 7 zeigen, eine zur Einstecköffnung 7 hin offene Nut 14 aufweist und die Verriegelungsfeder 8 unverlierbar in der Nut 14 vorgesehen ist. Die Nut 14 ist dabei derart ausgebildet, daß von der Verriegelungsfeder 8 lediglich der Entriegelungsabschnitt 13 von der Außenseite der Kupplungsaufnahme 3 her über ein Werkzeug zugänglich ist. In der Kupplungsaufnahme 3 ist eine in die Nut 14 mündende, von der Außenseite der Kupplungsaufnahme 3 her zugängliche Entriegelungsöffnung 15 vorgesehen. Die Verriegelungsfeder 8 erstreckt sich mit ihrem Entriegelungsabschnitt 13 von der Nut 14 nach außen bis in die Entriegelungsöffnung 15 hinein. Dabei ist die Verriegelungsfeder 8 im Gegensatz zum Stand der Technik derart ausgebildet und in der Nut 14 der Kupplungsaufnahme 3 angeordnet, daß ein Herunterdrücken des Ent-riegelungsabschnittes 13 der Verriegelungsfeder 8 zu einer Entriegelung führt; eine radial nach innen gerichtete Bewegung des Entriegelungsabschnittes 13 der Verriegelungsfeder 8 führt also dazu, daß sich die Verriegelungsabschnitte 9, 10 der Verriegelungsfeder 8 radial nach außen bewegen, so daß sie nicht mehr im Eingriff mit dem am Kupplungsstecker 4 verwirklichten Anschlag 11 sind.

Im dargestellten Ausführungsbeispiel einer erfindungsgemäßen Steckkupplung 1 sind, wie dies insbesondere die Fig. 2, 5 und 10 zeigen, die Nut 14 in der Kupplungsaufnahme 3 und die Verriegelungsfeder 8 umlaufend bzw. im wesentlichen umlaufend ausgebildet; die Verriegelungsfeder 8 ist entsprechend in der Nut 14 angeordnet.

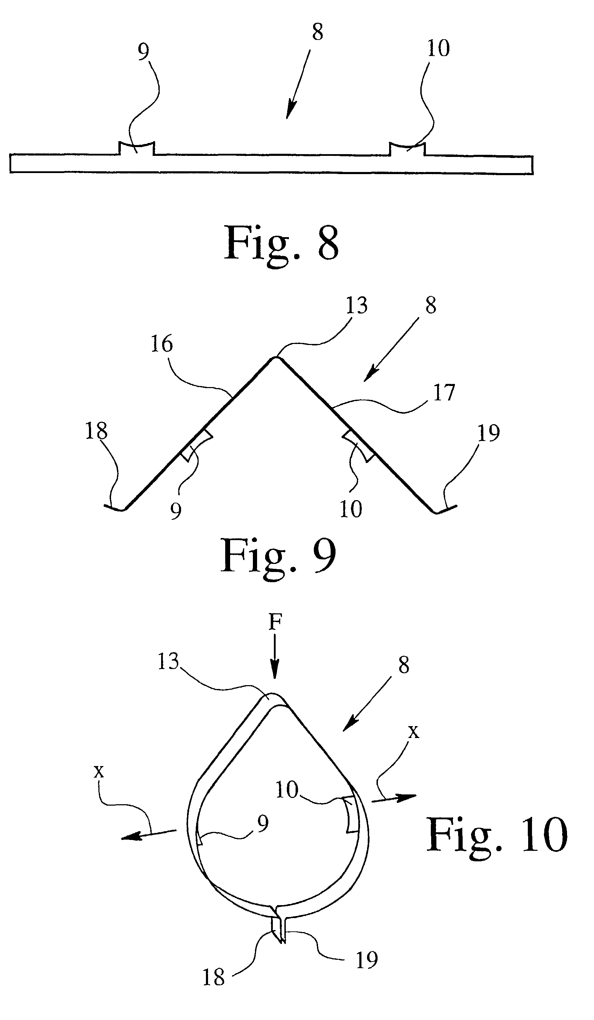

Einzelheiten der im dargestellten Ausführungsbeispiel verwirklichten Verriegelungsfeder 8 zeigen insbesondere die Fig. 8, 9 und 10. Ausgangspunkt ist die in Fig. 8 dargestellte, zunächst blattfederartig ausgebildete Verriegelungsfeder 8 mit den beiden Verriegelungsabschnitten 9, 10. In Fig. 9 ist dargestellt, daß aus dem, was zunächst in Fig. 8 dargestellt ist, dann eine zweischenklige Blattfeder geworden ist, wobei der Schenkel 16 mit dem Verriegelungsabschnitt 9 und der Schenkel 17 mit dem Verriegelungsabschnitt 10 versehen ist. Die Verriegelungsabschnitte 9, 10 sind an ihren aufeinander zu gerichteten Seiten kreisbogenförmig ausgeführt, wobei der Radius der Kreisbögen etwa dem Radius der Einstecköffnung 7 der Kupplungsaufnahme 3 entspricht. Ein Vergleich der Fig. 8 und 9 zeigt, daß die Verriegelungsabschnitte 9, 10 von den Schenkeln 16, 17 abgewinkelt sind. Im übrigen bildet der Schenkelgrund den Entriegelungsabschnitt 13 der Verriegelungsfeder 8. Im nicht-eingebauten Zustand stehen die beiden Schenkel 16, 17 der Verriegelungsfeder 8 unter einem Winkel von etwa 90° zueinander.

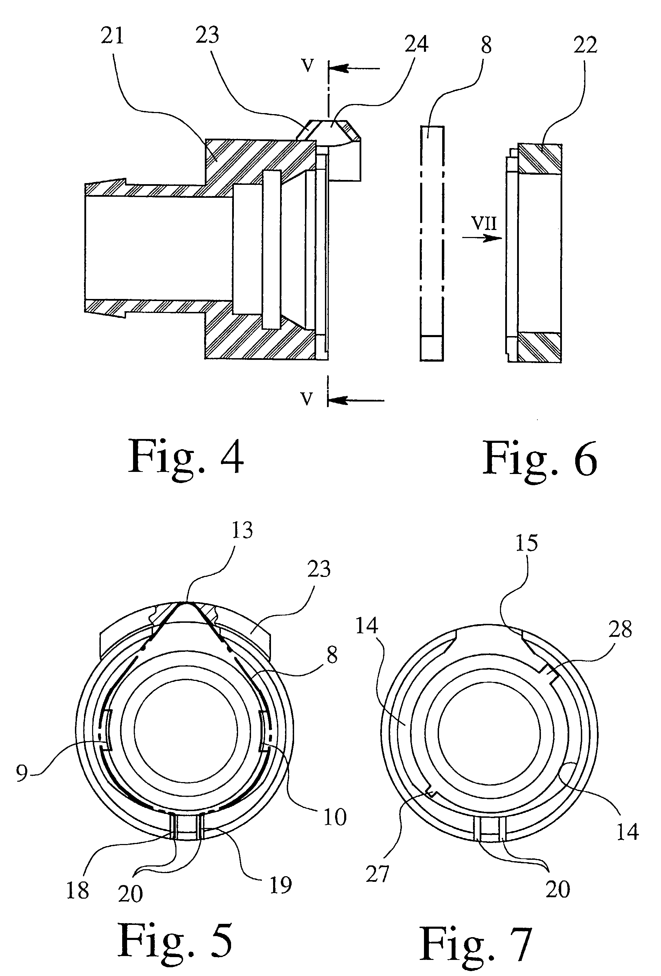

Wie die Fig. 2 und 5 zeigen, ist die Verriegelungsfeder 8 in der Nut 14 der Kupplungsaufnahme 3 an ihrem dem Entriegelungsabschnitt 13 gegenüberliegenden Bereich gehalten. Das ist im einzelnen dadurch realisiert, daß die freien Enden 18, 19 jedes Schenkels 16, 17 der Verriegelungsfeder 8 in einem Winkel von etwa 40° bis 80° abgewinkelt sind und die abgewinkelten Enden 18, 19 der Schenkel 16, 17 in radiale Schlitze 20 in der Kupplungsaufnahme 3 eingesetzt sind.

Wie sich aus den Fig. 2, 5 und 7 ergibt, ist im dargestellten Ausführungsbeispiel einer erfindungsgemäßen Steckkupplung 1 die in der Kupplungsaufnahme 3 vorgesehene Nut 14 im Bereich der Verriegelungsabschnitte 9, 10 der Verriegelungsfeder 8 tiefer als dort, wo die Verriegelungsfeder 8 gehalten ist, also tiefer als in dem dem Schlitz 20 benachbarten Bereich. Die Tiefe der Nut 14 ist insgesamt so gewählt, daß im entriegelten Zustand, der in Fig. 2 rechts dargestellt ist, die Verriegelungsfeder 8 nicht in die Einstecköffnung 7 hineinragt, auch nicht mit den Verriegelungsabschnitten 9, 10. Nur im verriegelten Zustand, der in Fig. 2 links dargestellt ist, ragen die Verriegelungsabschnitte 9, 10 der Verriegelungsfeder 8 in die Einstecköffnung 7 bzw. in die Nut 12 des Kupplungssteckers 4.

Im übrigen ist ein Ausführungsbeispiel der erfindungsgemäßen Steckkupplung 1 dargestellt, bei dem die Kupplungsaufnahme 3 zweiteilig ausgebildet ist, nämlich aus einem Grundkörper 21 und einem Abschlußteil 22 besteht, wie dies in den Fig. 4 und 6 dargestellt ist. Dabei sind sowohl die Nut 14 als auch der Schlitz 20 teilweise im Grundkörper 21 und teilweise im Abschlußteil 22 verwirklicht. Folglich kann beim Zusammenbau von Grundkörper 21 und Abschlußteil 22 die Verriegelungsfeder 8 entweder in den Grundkörper 21 oder in das Abschlußteil 22 eingesetzt werden. Nach dem Einsetzen der Verriegelungsfeder 8 werden der Grundkörper 21 und das Abschlußteil 22 fest miteinander verbunden, beispielsweise über eine Schraubverbindung.

Nicht dargestellt, aber grundsätzlich möglich ist es auch, die Kupplungsaufnahme 3 insgesamt einstückig auszubilden, wobei dann die Verriegelungsfeder 8 von innen, also über die Einstecköffnung 7, in die Nut 14 eingesetzt wird.

Im Gegensatz zu dem in den Fig. 1 bis 3 dargestellten Ausführungsbeispiel ist bei dem in den Fig. 4 und 5 dargestellten Ausführungsbeispiel auf der Kupplungsaufnahme 3 oberhalb der Entriegelungsöffnung 15 eine Überdeckung 23 vorgesehen. Die Überdeckung 23 weist eine in die Entriegelungsöffnung 15 übergehende Durchgangsöffnung 24 auf. Die Größe der Durchgangsöffnung 24 ist so gewählt, daß der Entriegelungsabschnitt 13 der Verriegelungsfeder 8 auch im Verriegelungszustand, der in der Fig. 5 dargestellt ist, nicht aus der Durchgangsöffnung 24 nach außen ragt. Das ist bei dem in den Fig. 1 und 2 dargestellten Ausführungsbeispiel anders. Bei diesem Ausführungsbeispiel steht der Entriegelungsabschnitt 13 der Verriegelungsfeder 8 im Verriegelungszustand über die Außenseite der Kupplungsaufnahme 3 über.

Des weiteren gilt für das dargestellte Ausführungsbeispiel einer erfindungsgemäßen Steckkupplung 1, daß zwischen der Kupplungsaufnahme 3 und dem Kupplungsstecker 4 eine Verdrehsicherung vorgesehen ist. Im dargestellten Ausführungsbeispiel besteht die Verdrehsicherung aus zwei ungleich großen Vorsprüngen 25, 26 am Kupplungsstecker 4 und dazu korrespondierenden in Einsteckrichtung ausgerichteten Nuten 27, 28 in der Kupplungsaufnahme 3. Wie dies Fig. 7 zeigt, befinden sich im Ausführungsbeispiel nach den Fig. 4 bis 7 die Nuten 27, 28 sowohl im Grundkörper 21 als auch im Abschlußteil 22. Denkbar ist jedoch auch, die Nuten 27, 28 nur im Grundkörper 21 oder nur im Abschlußteil 22 zu verwirklichen.

Das Kuppeln der Steckkupplung 1 erfolgt nun derart, daß zunächst der Kupplungsstecker 4 in die Einstecköffnung 7 der Kupplungsaufnahme 3 so weit eingesteckt wird, bis eine am vorderen Endes des Kupplungssteckers 4 vorgesehene Auflaufschräge 29 mit den in die Einstecköffnung 7 hineinragenden Verriegelungsabschnitten 9, 10 der Verriegelungsfeder 8 in Berührung kommt. Beim weiteren Einstecken des Kupplungssteckers 4 werden die Verriegelungsabschnitte 9, 10 der Verriegelungsfeder 8 in die Nut 14 der Kupplungsaufnahme 3 hineingedrückt, bis der im rechten Teil der Fig. 2 dargestellte Zustand erreicht ist. Da sich an die Anlaufschräge 29 des Kupplungssteckers 4 die Nut 12 anschließt, rasten beim weiteren Einstecken des Kupplungssteckers 4 in die Einstecköffnung 7 der Kupplungsaufnahme 3 die Verriegelungsabschnitte 9, 10 der Verriegelungsfeder 8 in die Nut 12 des Kupplungssteckers 4 ein. Nunmehr sind die Kupplungsaufnahme 3 und der Kupplungsstecker 4 verriegelt.

Zum Entriegeln wird eine in Fig. 10 angedeutete Kraft F auf den Entriegelungsabschnitt 13 der Verriegelungsfeder 8 ausgeübt. Hierdurch bewegen sich die Verriegelungsabschnitte 9, 10 der Verriegelungsfeder 8 entsprechend der Darstellung in der Fig. 10 in Richtung der Pfeile x, bis wieder der im rechten Teil der Fig. 2 dargestellte Zustand erreicht ist. Der Kupplungsstecker 4 kann aus der Kupplungsaufnahme 3 herausgezogen werden. Wird keine Kraft F mehr auf den Entriegelungsabschnitt 13 der Verriegelungsfeder 8 ausgeübt, federn die Verriegelungsabschnitte 9, 10 der Verriegelungsfeder 8 in den Zustand zurück, der in Fig. 2 links dargestellt ist.

Im übrigen sei noch darauf hingewiesen, daß im dargestellten Ausführungsbeispiel einer erfindungsgemäßen Steckkupplung 1 im vorderen Bereich des Kupplungssteckers 4 ein zylindrischer Abschnitt 30 vorgesehen ist, der mit seiner Stirnseite an einen Anschlag 31 am Ende der Einstecköffnung 7 in der Kupplungsaufnahme 3 anschlägt. Die Länge des Kupplungssteckers 4 und die Tiefe der Einstecköffnung 7 in der Kupplungsaufnahme 3, begrenzt durch den Anschlag 31, sind derart gewählt, daß unmittelbar nach dem Einrasten der Verriegelungsabschnitte 9, 10 der Verriegelungsfeder 8 in die Nut 12 des Kupplungssteckers 4 der Kupplungsstecker 4 am Anschlag 31 der Kupplungs-aufnahme 3 anschlägt.

Schließlich gilt für das dargestellte Ausführungsbeispiel einer erfindungsgemäßen Steckkupplung 1 noch, daß zwischen der Kupplungsaufnahme 3 und dem Kupplungsstecker 4 im Bereich des zylindrischen Abschnitts 30 des Kupplungssteckers 4 eine Dichtung verwirklicht ist. Hierzu ist in einer entsprechenden Nut in der Kupplungsaufnahme 3 ein U-Ring 32 vorgesehen, der zusammen mit dem zylindrischen Abschnitt 30 des Kupplungssteckers 4 wirkt.

## Patentansprüche

1. Steckkupplung (1), insbesondere für Schlauchverbindungen und zur Verwendung in Kraftfahrzeugen, mit einer Kupplungsaufnahme (3) und mit einem Kupplungsstecker (4), wobei die Kupplungsaufnahme (3) mit einer Einstecköffnung (7) für den Kupplungsstecker (4) versehen ist und mindestens eine der Verriegelung von Kupplungsaufnahme (3) und Kupplungsstecker (4) dienende Verriegelungsfeder (8) aufweist und an der Verriegelungsfeder (8) mindestens ein Verriegelungsabschnitt (9, 10) und ein von der Außenseite der Kupplungsaufnahme (3) her betätigbarer Entriegelungsabschnitt (13) vorgesehen sind, **dadurch gekennzeichnet**, daß die Kupplungsaufnahme (3) eine zur Einstecköffnung (7) hin zumindest teilweise offene Nut (14) aufweist und die Verriegelungsfeder (8) unverlierbar in der Nut (14) vorgesehen ist.

2. Steckkupplung nach Anspruch 1, dadurch gekennzeichnet, daß von der Verriegelungsfeder (8) nur der Entriegelungsabschnitt (13) von der Außenseite der Kupplungsaufnahme (3) her zugänglich ist.

3. Steckkupplung nach Anspruch 1 oder 2, dadurch gekennzeichnet, daß die Kupplungsaufnahme (3) eine in die Nut (14) mündende, von der Außenseite - vorzugsweise über ein Verriegelungsteil - her zugängliche Entriegelungsöffnung (15) aufweist und sich die Verriegelungsfeder (8) mit ihrem Entriegelungsabschnitt (13) von der Nut (14) in die Entriegelungsöffnung (15) hinein erstreckt.

4. Steckkupplung nach einem der Ansprüche 1 bis 3, dadurch gekennzeichnet, daß die Verriegelungsfeder (8) so ausgebildet und in der Nut (14) angeordnet ist, daß die Entriegelung durch Aufbringen einer Kraft (E) auf den Entriegelungsabschnitt (13) der Verriegelungsfeder (8) erfolgt und dadurch der Verriegelungsabschnitt (9, 10) etwa in radialer Richtung in die Nut (14) hinein bewegt wird und außer Eingriff mit dem Kupplungsstecker (4) kommt.

5. Steckkupplung nach einem der Ansprüche 1 bis 4, dadurch gekennzeichnet, daß die Nut (14) als Umfangsnut ausgebildet ist und die Verriegelungsfeder (8) umlaufend in der Nut (14) angeordnet ist.

6. Steckkupplung nach einem der Ansprüche 1 bis 5, dadurch gekennzeichnet, daß die Verriegelungsfeder (8) als zweischenkelige Blattfeder ausgebildet ist, an jedem Schenkel (16, 17) wenigstens ein in Richtung auf den anderen Schenkel (17, 16) abgewinkelter Verriegelungsabschnitt (9, 10) vorgesehen ist und der Schenkelgrund den Entriegelungsabschnitt (13) bildet.

7. Steckkupplung nach Anspruch 6, dadurch gekennzeichnet, daß im nicht-eingebauten Zustand der Verriegelungsfeder (8) die Schenkel (16, 17) miteinander einen Winkel von 70° bis 110°, vorzugsweise von etwa 90° bilden.

8. Steckkupplung nach einem der Ansprüche 1 bis 7, dadurch gekennzeichnet, daß die Verriegelungsfeder (8) in der Nut (14) an ihrem dem Entriegelungsabschnitt (13) gegenüberliegenden Bereich - mindestens an einer Stelle, vorzugsweise an zwei Stellen - gehalten ist.

9. Steckkupplung nach Anspruch 8, dadurch gekennzeichnet, daß im nicht-eingebauten Zustand der Verriegelungsfeder (8) die Enden (18, 19) der Schenkel (16, 17) in einem Winkel von 40° bis 80° abgewinkelt und die abgewinkelten Enden (18, 19) der Schenkel (16, 17) in einen radialen Schlitz oder in radialen Sclitzen (20) in der Kupplungsaufnahme (3) eingesetzt sind.

10. Steckkupplung nach Anspruch 8 oder 9, dadurch gekennzeichnet, daß im Bereich der Verriegelungsabschnitte (9, 10) der Verriegelungsfeder (8) die Nut (14) tiefer ist als im Bereich der Halterung der Verriegelungsfeder (8).

11. Steckkupplung nach einem der Ansprüche 1 bis 10, dadurch gekennzeichnet, daß die Verriegelungsabschnitte (9, 10) der Verriegelungsfeder (8) auf gegenüberliegenden Seiten etwa im rechten Winkel zum Entriegelungsabschnitt (13) vorgesehen sind.

12. Steckkupplung nach einem der Ansprüche 1 bis 11, dadurch gekennzeichnet, daß die Kupplungsaufnahme (3) einen Grundkörper (21) und ein Abschlußteil (22) aufweist.

13. Steckkupplung nach Anspruch 12, dadurch gekennzeichnet, daß die Nut (14) teilweise in dem Grundkörper (21) teilweise in dem Abschlußteil (22) ausgebildet ist.

14. Steckkupplung nach einem der Ansprüche 1 bis 13, dadurch gekennzeichnet, daß zwischen der Kupplungsaufnahme (3) und dem Kupplungsstecker (4) eine Verdrehsicherung vorgesehen ist.
